Europäisches Patentamt

(19) European Patent Office

Office européen des brevets

(11)    EP 0 798 941 A2

(12)    **EUROPEAN PATENT APPLICATION**

(43) Date of publication:
01.10.1997 Bulletin 1997/40

(51) Int. Cl.$^6$: **H04Q 3/00**, H04M 3/36

(21) Application number: 97103877.3

(22) Date of filing: 07.03.1997

(84) Designated Contracting States:
DE ES FR GB IT NL SE

(30) Priority: 29.03.1996 US 625052

(71) Applicant: AT&T Corp.
New York, NY 10013-2412 (US)

(72) Inventor: Ash, Gerald Richard
West Long Branch, New Jersey 07764 (US)

(74) Representative: KUHNEN, WACKER & PARTNER
Alois-Steinecker-Strasse 22
85354 Freising (DE)

(54)    **Method for modeling a network**

(57)    A telecommunications network (10) can be modeled by the combination of a routing function (38) and a network sizing function (40). The routing function (38) simulates the network over which call events, generated by an event generator (42) are dynamically routed. A performance evaluator (46) within the routing function (38) measures the performance of the network and advises the sizing function (40) whether the performance is within a prescribed tolerance. If the performance is not within the prescribed tolerance, the sizing function (40) increases the size of the simulated network until the performance is within the prescribed tolerance.

FIG. 3

## Description

Technical Field

This invention relates to a technique for modeling a telecommunications network to facilitate its design.

Background Art

Today, telecommunication traffic between two end points (e.g., two individual telephone subscribers) is carried over one or more networks. Each network comprises at least one, and typically a plurality of trunk groups, each group taking the form one or more copper cables, optical fibers, or a radio channels. The trunk groups run between hubs at which one or more switches are located for connecting traffic to another hub. The process by which the switches select individual trunks (i.e., a switched pair of conductors or a time slot within a multiplexed signal on a fiber or on a radio channel) is known as routing. Typically, each switch contains, or has access to, a routing table to enable it to route traffic on a given trunk. Such routing tables describe the choices for routing a connection request from an originating switch to a terminating switch to afford that connection request a particular grade of service by various classes-of-service. The various classes-of-service are integrated on the network and share the network capacity. The various classes-of-service can have various resource requirements, traffic characteristics, and grade-of-service performance objectives.

There are generally three schemes that may be utilized to create such routing tables. The tables may be fixed to route traffic for example in a hierarchical fashion. When the tables are fixed, there is little flexibility to share bandwidth among switched pairs or equivalent on a given trunk group. Rather than fix the routing tables, as in the case of fixed hierarchical routing, the tables may be changed dynamically, either on a preplanned basis, say hourly, or on a real-time basis, to allocate bandwidth among the switched pairs. Lastly, the routing tables may be changed to accomplish both dynamic traffic and transport routing. As with dynamic traffic routing, the tables may be adjusted, either on a pre-planned or on a real-time basis to accomplish dynamic transport routing. To accomplish dynamic transport routing, the routing tables may be adjusted to allocate bandwidth for the purposes of achieving efficient trunk utilization, automatic transport provisioning, diverse trunk group routing, and fast restoration.

Routing table adjustment is an important aspect of managing a network to assure that various performance objects, including service quality, are met at a minimal cost under all conditions, including shifts in load and failures. Another aspect of managing a network is network capacity. Providing sufficient network capacity is important because the ability to afford a prescribed level of performance may be difficult, if not impossible to achieve if insufficient network capacity exists, regardless of the routing scheme. In practice, management of network capacity is achieved in accordance with a multi-year forecast, established, in part, by extrapolating past network usage. While it is possible to add capacity on a short term basis, additional network capacity is typically added on a pre-planned, long term basis, given the long lead time generally required to add additional trunk groups. Generally, increasing network capacity by adding additional trunks improves network performance. However, adding additional capacity that is not utilized increases overall costs which is undesirable.

Designing a network to achieve a prescribed level of performance without excessive unused capacity is a complex undertaking. In the past, classical link models have been employed in network design to size the trunk groups appropriately. Classical link models are useful for designing networks that utilize hierarchical routing but are not useful for designing networks utilizing dynamic routing methods. One reason is that the flow of traffic on trunk groups within a dynamically-routed network is a more complicated function of time, network status, and other variables, than it is in a hierarchical network. Second, using the classical link model does not generally yield a correctly sized dynamically-routed network since the link traffic used in such models is inappropriate for sizing a dynamically-routed network.

Thus, there is a need for a technique, not subject to the foregoing disadvantages, for modeling a dynamically routed network to facilitate its design.

Brief Summary of the Invention

Briefly, in accordance with the invention, a technique is provided for modeling a dynamically-routed network of trunk groups that carry telecommunications between different end-points to facilitate the design of such a network. To model the network, an initial set of requirements for the trunk groups within the network for interconnecting a given set of switches is established based on an estimated traffic load. From such a set of requirements, an initial set of trunk groups are established, typically by way of simulation, rather than physically provide such trunk groups. Next, a series of call events are generated, typically by simulation, in accordance with the estimated traffic load. The traffic arising from such call events is routed (by way of simulation) through the initially established set of trunk groups in accordance with a preselected dynamic routing technique. Thereafter, the performance of the network is measured in accordance with the amount of the traffic that is completed. Typically, this may be accomplished by counting the number of blocked call events at each switch for a given time period. From the number of blocked call events, the performance of the network is measured. If the measured network performance is within established tolerance levels, the network can be physically realized from the initially-established trunk requirements. (In other words, the network can be established by providing physical trunk groups between the switches in the manner established by the initial set of trunk requirements.) Should the performance objective not be met, then the initial set of trunk groups requirements must be adjusted (re-sized) to add additional trunks (again, by way of simulation). The above process is repeated to determine if the prescribed level of performance has been met by virtue of the additional trunks now available to carry traffic. Once the desired level of performance has been met, the network can be physically realized.

Brief Description of the Drawings

FIGURE 1 is a block schematic diagram of a conventional telecommunications network;

FIGURE 2 is block schematic diagram of a portion of the network of FIG. 1 showing the manner in which calls are routed; and

FIGURE 3 is a block schematic diagram of a model, in accordance with the invention, for modeling a network of the type illustrated in FIG. 1.

Detailed Description

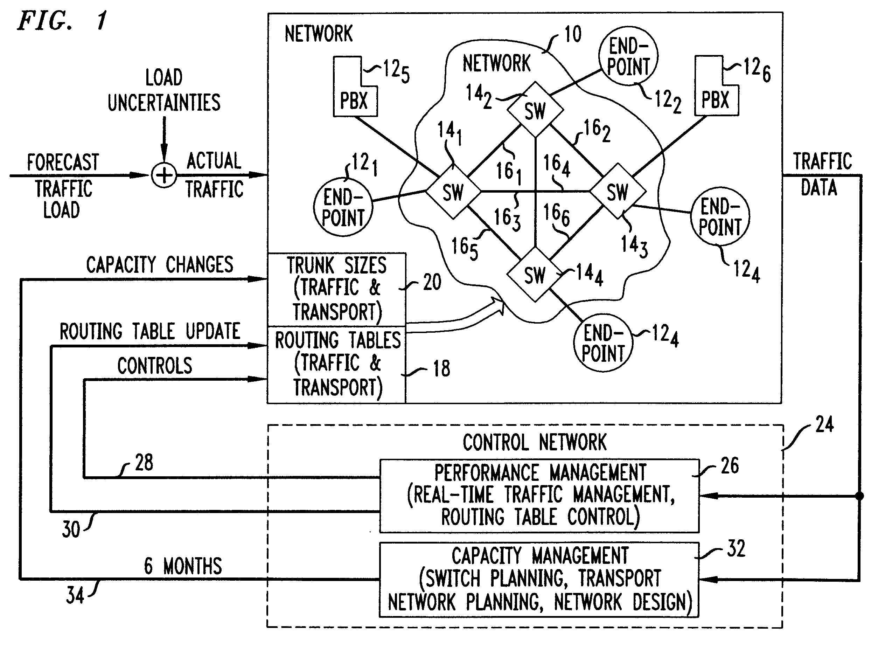

FIGURE 1 shows a conventional telecommunications network 10 for carrying telecommunications traffic (e.g., voice, data or wide-band transmissions) among a set of end-points $12_1$-$12_6$. The exact nature of each end-points is not critical. For example, the end-points $12_1$-$12_4$ may be individual local end-offices to which individual telephone subscribers are connected whereas the end-points $12_5$ and $12_6$ may be business or institutions with separate PBX or PABX facilities (not shown) on which business customers are terminated. Alternatively, one or more of the end-points may be a facility at which wide band signals (e.g., video signals) originate or terminate.

The network 10 comprises a plurality of switches $14_1$-$14_4$, each typically a Lucent Technologies No. 5 ESS switch. The switches $14_1$-$14_4$ are linked via trunk groups $16_1$-$16_6$ that each contain at least one trunk connection in the form of a switched pair of conductors or its equivalent. For example, the trunk may comprises a time slot within a multiplexed signal on optical fiber or on a radio channel rather than a conductor pair within a conventional multi-conductor copper cable. One or more of the trunk groups $16_1$-$16_6$ carry traffic that originates at a particular one of the switches $14_1$-$14_4$ and terminates at one or more other switches. The switches $14_1$-$14_4$ at which such traffic originates and terminates are referred to as originating and terminating switches, respectively.

In the illustrated embodiment of FIG. 1, each of the switches $14_1$-$14_4$ is linked to each of the others via one of the trunk groups $16_1$-$16_6$ although in practice, this may not necessarily be true. In some instances, the only path possible between an originating and terminating switch $14_1$-$14_4$ may exist through one or more intermediate ("via") switches. For example, an originating and terminating one of the switches $14_1$-$14_4$ may lie within separate local exchanges (not shown) and the only path between them may exist through one or more via switches maintained by an Inter-Exchange Carrier (IXC), such as AT&T. Even in the embodiment illustrated in FIG. 1, it may not be possible for traffic to pass directly between the switches $14_1$ and $14_3$ because the trunk group $16_3$ connecting the two switches has failed, or lacks sufficient capacity to handle the traffic. Under such conditions, the traffic would be routed through at least one via switch, such as switch $14_2$.

To enable the switches $14_1$-$14_4$ to route traffic over the trunk groups $16_1$-$16_6$, each switch either contains, or is able to access, a routing table (i.e., data base) 18 that stores information about the configuration of the network in terms of location of the trunk groups and the switches to which they are connected. In addition, each switch contains or has access to, a table (i.e., data base) 20 that stores information about the size of each trunk group (i.e., the number of trunks and their individual bandwidth). The switches $14_1$-$14_4$ collectively use the information in the tables 18 and 20 to establish the appropriate connections between switched pairs (or equivalents) on the trunk groups $16_1$-$16_6$ that are to carry the traffic.

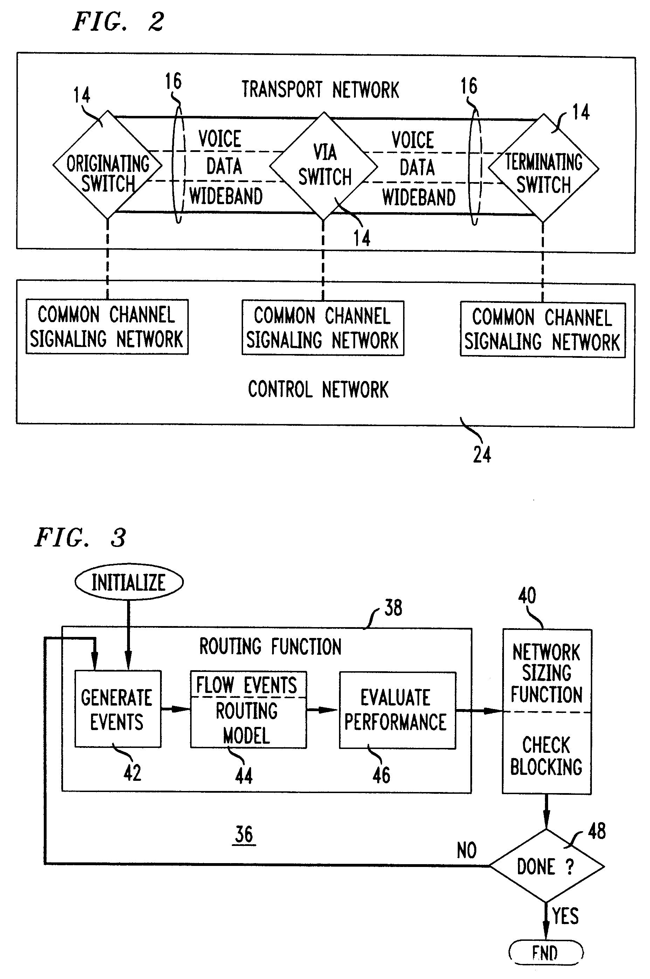

The routing process may be better understood by reference to FIG. 2 which shows a portion of the network 10 of FIG. 1. Associated with the network 10 is a control network 24 that works in conjunction with the switches $14_1$-$14_4$ to control the network 10. The control network 24 communicates, for example, with the switches $14_1$-$14_4$ via a common channel signaling network, such as the CCS-7 network utilized by AT&T, or some other data communications network. Depending on the control strategy, either an originating one of the switches $14_1$-$14_4$ or the control network 24 itself, initially makes a determination about the class-of-service of the originating traffic. The traffic may be voice, data, or a wide band signal, such as a television signal. In addition to identifying the type of traffic, either the originating one of the switches $14_1$-$14_4$ or the control network 24 identifies the configuration of the network 10, and in particular, the identity of each of the terminating switches Once the class-of service, the network configuration, and the identity of each terminating switch has been established, the originating one of the switches $14_1$-$14_4$ or the control network 24 determines the routing pattern within the network capable of providing the desired class-of-service between the originating and terminating switches. In other words, the originating one of the switches $14_1$-$14_4$ or control network 24 selects the requisite trunk groups $16_1$-$16_6$ that have sufficient capacity to carry the traffic between the originating and terminating switches $14_1$-$14_4$. Lastly, the originating one of the switches $14_1$-$14_4$ or the control network 24 dynamically selects one or more available trunks within the selected trunk groups to carry such traffic.

Referring to FIG. 1, the traffic passing on the network 10 is rarely constant. Indeed, the traffic usually varies because of variations in load. In this regard, the actual traffic may best be viewed as the algebraic combination of a forecasted load, representing an average (expected) amount of traffic, and load uncertainties, representing deviations in the expected traffic. Such load uncertainties may occur as a result of different call patterns associated with different times of day or different days of the week. To assure a prescribed level of service (as measured by the number of blocked calls in a given time frame between switches), it is desirable to constantly manage the network by regularly updating the information in the routing and trunk tables 18 and 20, respectively. To that end, the control network 24 typically includes a performance management element 26, for example, in the form of a program running on a computer (not shown) that manages the traffic on the network in real time by controlling each routing table 18, as needed, possibly in real time.

The performance management element 26 utilizes a dynamic routing technique as described previously for controlling (adjusting) each routing table 18 on a regular basis as indicated by the control line 28. In this way, the performance element updates the parameters used by the originating one of the switches $14_1$-$14_4$ or the control network 24 in making dynamic routing decisions The performance management element 26 updates each routing table 18 in real time, say every five seconds, and may completely update each routing table on a routine basis, say every week, as indicated by the update line 30.

On a longer term basis, it may be desirable periodically upgrade the capacity of the network 10 (by adding more trunks to trunk groups $16_1$-$16_6$) to provide additional capacity to meet future demand. For that reason, the control network 26 includes a capacity management element 32, in the form of a control program running on a computer, for tracking the overall design of the network in terms of the capacity of the trunk groups $16_1$-$16_6$. The capacity management element 32 provides information on capacity changes at prescribed intervals, say every six months, and the trunk size table 20 is updated as capacity is added. Typically, the overall capacity of the network 10 is upgraded over many months so updating the table 20 as capacity is added is sufficient.

Designing the network 10 is a complex undertaking. The network 10 should provide a prescribed level of service. To that end, the network 10 must possess a sufficient trunk capacity. One approach to assuring that the network 10 meets the prescribed level of performance is to design the network with an extensive amount of excess trunk capacity so that almost no calls are blocked under any circumstances. However, such additional trunk capacity increases the overall cost of the network, raising the cost per minute of usage. Thus, the design of the network 10 requires a balance between satisfying a prescribed level of performance and minimizing overall cost.

In the past, designers have employed classical link models to design telecommunications networks, such as the network 10. Unfortunately, such models are not useful for dynamically routed networks. Referring now to FIG. 3, there is shown a model 36, in accordance with the present invention, for modeling a dynamically routed network to facilitate its design. (Although not shown, the model 36 is a network design function that can be incorporated in the capacity management element 32 of FIG. 1.)

The model 36 is depicted functionally, rather than structurally. In this regard, the model 36 includes a routing function 38 and a network sizing function 40. The routing and sizing functions 38 and 40, respectively, may be performed by separately programmed digital computers, or a single computer running individual programs for accomplishing each function. Alternatively the routing and sizing functions 36 and 38, respectively, could also be performed by separate "hard-wired" logic.

The routing function 38 includes an event generator 42, in the form of a simulation program or a hard-wired element, that generates a prescribed pattern of call events in real time to simulate a prescribed level of traffic that is expected to flow across a network, such as the network 10 of FIG. 1. The call events might include a certain number of voice, data and wide band signal transmissions within a prescribed interval. The event generator 42 is typically initialized as to generate call events within a simulated network in accordance with a predetermined traffic load matrix. The traffic load matrix may be established in a variety of ways.

The call events generated by the event generator 42 are applied to a routing model 44, typically a simulation program running on a computer (not shown) that simulates a network, such as the network 10 of FIG. 1. The network initially simulated by the routing model 44 corresponds to network having an initial set of trunk requirements established in accordance with the load matrix utilized to initialize the event generator 42. In particular, the routing model 44 simulates a network in accordance with a set of initial trunk requirements that are determined using Kruithof's Projection Method as described In the article "Properties of Kruithof's Projection Method," by R.S. Krupp, published in *The Bell System Technical Journal,* Vol. 58, No. 2, February, 1979 at pages 517-538. Simply stated, Kruithof's technique predicts the switch-to-switch trunk requirements $p_{ij}$ for the next iteration from a number of originating switches $i = 1, 2 ... N$ to a number of terminating switches $j = 1, 2 ... N$ under the condition that the trunk requirements may be established by adding the entries in the matrix

$$\mathbf{p} = [p_{ij}].$$

Assume that a matrix

$$\mathbf{q} = [q_{ij}],$$

representing the switch-to-switch trunk requirements for a previous iteration is known. Also, the total trunk requirements $b_i$ at each switch $i$ and the total trunk requirements $d_j$ at each switch $j$ are estimated as follows:

$$b_i = \frac{\alpha_i}{\gamma}$$

$$d_j = \frac{\alpha_j}{\gamma}$$

where $\alpha_i$ erlangs is the total traffic at switch $i$ and $\alpha_j$ erlangs is the total traffic at switch $j$ and $\gamma$ is the average erlang carrying capacity per trunk.

The terms $p_{ij}$ can be obtained as follows:

$$b_i = \sum_j p_{ij} \qquad (1)$$

$$d_j = \sum_i p_{ij} \qquad (2)$$

Kruithof's formula for estimating $\mathbf{p}$ from $\mathbf{q}$ is

$$p_{if} = q_{ij} E_i F_j \qquad (3)$$

The terms $E_i$ and $F_j$ are factors for the originating and terminating switches and are implicitly defined. They are computed by solving equations (1)-(3) simultaneously.

Once the network is simulated, the routing model 44 then routes the call events generated by the event generator 42 across the simulated network using any one of several known or proposed dynamic call routing techniques. For example, the routing model 44 may utilize a real-time traffic dependent routing technique whereby call event routing is changed at fixed intervals (say every five minutes) based on traffic load estimates. Alternatively, the call events generated by the call event generator 42 may be routed by the routing model 44 across the simulated network using real-time event dependent routing, including techniques such as the Real-Time Network Routing (RTNR) technique that is utilized in AT&Ts network, the routing model Learning with Random Routing (LRR), Dynamic Alternate Routing (DAR) and State and Time Dependent Routing (STR).

Listed below are some examples of dynamic routing strategies to which the model 36 has been applied:

### Dynamic Nonhierarchical Routing (DNHR)

In accordance with DNHR, routing tables are changed dynamically in a preplanned time-varying manner. With preplanned (time-sensitive) dynamic traffic routing (PPDTR) strategies, such as DNHR, routing patterns contained in routing tables might change every hour or at least several times a day to respond to known shifts in traffic loads. These routing patterns are preplanned, pre-programmed, and redesigned perhaps each week within the performance management routing control function.

### Real-Time Traffic-Dependent Routing

Traffic-dependent Real-Time Dynamic Traffic Routing (RTDTR) strategies may change routing patterns every few minutes based on traffic load estimates. One example of traffic-dependent RTDTR is the STAR (System to Test Adaptive Routing) strategy. This strategy recomputes alternate routing paths every five minutes based on traffic data. Traffic-dependent RTDTR strategies may also be based on call completion statistics determined through learning models. One such learning strategy involves observing the completion rate of calls routed on candidate paths, and choosing the paths according to their completion probability, with the path having the highest probability chosen first on down to the path with the lowest probability.

### Real-Time Event Dependent Routing

Event dependent RTDTR strategies may also use learning models, such as learning with random routing (LRR), dynamic alternate routing (DAR), and the state and time dependent routing (STR). LRR is a decentralized call-by-call strategy with routing updates based on random routing. LRR uses a simplified decentralized learning strategy to achieve flexible adaptive routing. The direct trunk group is used first if available, and a fixed alternate path is used until it is blocked. In this case, a new alternate path is selected at random as the alternate route choice for the next call overflow from the direct trunk group. In the DAR and STR learning approach, the path last tried, which is also successful, is tried again until blocked, at which time another path is selected at random and tried on the next call. In the STR enhancement of DAR, the set of candidate path choices is changed with time in accordance with changes in traffic load patterns.

### Real-Time State Dependent Routing

State dependent RTDTR strategies may change routing patterns: (a) every few seconds, as in the dynamically controlled routing (DCR) strategy, or trunk status map routing (TSMR) to enhance DNHR with real-time routing control adjustments, or (b) on every call, as in the RTNR strategy. In DCR, the selection of candidate paths at each switch is recalculated every 10 seconds. The path selection is done by a central routing processor (not shown), based on the busy-idle status of all trunks in the network, which is reported to the central processor every 10 seconds. TSMR is a centralized strategy with periodic updates based on periodic network status. TSMR routing provides periodic near real-time routing decisions in the dynamic routing network. The TSMR routing method involves having an update of the number of idle trunks in each trunk group sent to a network data base every five seconds. Routing patterns are determined from analysis of the trunk status data. In the TSMR dynamic routing strategy, if the first path is busy, the second path is selected from the list of feasible paths on the basis of having the greatest number of idle circuits at the time. RTNR for integrated class-of-service (COS) routing uses real-time exchange of network status information, with CCS query and status messages, to determine an optimal route from all possible choices. With RTNR, the originating switch first tries the direct route and if not available finds an optimal two-link path by querying the terminating switch through the CCS network for the busy-idle status of all trunk groups connected to the terminating switch. The originating switch compares its own trunk group busy-idle status to that received from the terminating switch, and finds the least loaded two-link path to route the call. RTNR allocates required bandwidth by class-of-service based on measured traffic flows and then reserves capacity when needed for each class-of-service.

*Mixed Dynamic Routing*

In a mixed dynamic routing (MXDR) network, many different methods of dynamic routing are used simultaneously. Calls originating at different switches use the particular dynamic routing method implemented at that switch, and different switches could be a mix of LRR, TSMR, and RTNR, for example. Studies show that a mix of dynamic routing methods can achieve good throughput performance in comparison to the performance of individual dynamic routing strategies.

*Integrated Class-of-Service Dynamic Routing*

Integrated class-of-service dynamic routing (ICDR) allows independent control, by class-of-service, of service specific performance objectives, routing rules/constraints, and traffic data collection. Class-of-service routing allows the definition of virtual networks by class-of-service. Each virtual network is allotted an amount of the total network bandwidth. This bandwidth can be shared with other classes-of-service, but is protected under conditions of network overload or stress. ICDR is able to meet different blocking objectives and load levels for different classes-of-service. For example, classes-of-service with different transmission capabilities, such as voice, 64 kbps, 384 kbps, and 1536 kbps switched digital services, can have different blocking objectives, as can classes-of-service that require the same transmission capabilities, e.g. domestic voice and international voice services. As illustrated in Figure 2, the various classes-of-service will share bandwidth on the network trunk groups.

*NDS0$_n$* -Flexible Data Network Routing-

NDS0$_n$ is a flexible data networking capability that allows any "$n$", (where $n$ is any number from 1 to 24 DS0 or 64 kbps circuits), to be selected on a given data call. NDS0 is another class-of-service that can be included in ICDR.

*Circuit Selection Capability Routing* (CSCR)

CSCR allows calls to require, prefer, and/or avoid a set of transmission characteristics in the network, such as voice enhancement processing, fiber-optic-transmission, radio-transmission, satellite transmission, etc. CSCR allows calls to be routed on specific transmission/trunk circuits that have the particular characteristics required by the call.

Regardless of the particular dynamic routing technique utilized by the routing model 44, the routing model attempts to access trunk groups in the simulated network according to the particular dynamic routing principles embodied within the routing model 44. Further, the routing model 44 accurately captures the sharing of trunk groups within the network according to each dynamic routing method which attempts to obtain maximum trunk usage, thereby minimizing costs.

As the routing model 44 is dynamically routing calls through the simulated network, a performance evaluator 46, typically in the form of a computer program, monitors the performance of the network simulated by the routing model. The performance evaluator 46 determines whether the network simulated by the routing model 44 meets a prescribed level of performance. In practice, the performance evaluator 46 measures the performance of the network simulated by the routing model 44 by measuring the number of blocked calls at various switches within the simulated network. When the simulated network lacks sufficient trunk capacity between switches to handle the call events generated by the event generator 42, some of calls events become blocked. The number of calls that are blocked at different switches within a given interval is utilized as a measure of the performance of the network.

The network performance evaluation made by the performance evaluator 46 is output to the network sizing function 40. The sizing function 40 determines whether the simulated network is appropriately sized in terms of the trunk capacity between switches in the network. Such a trunk capacity determination is made based on the number of blocked calls. The total blocked traffic $\Delta\alpha$ erlangs is estimated at each of the switches $14_1$-$14_4$ and an estimated trunk capacity increase $\Delta T$ for each switch may be calculated by the relationship

$$\Delta T = \frac{\Delta \alpha}{\gamma} \qquad (4)$$

where $\gamma$ is the average erlang carrying capacity per trunk. Thus, the $\Delta T$ for each estimate is distributed to each trunk group according to the Kruithof estimation method described previously. If the number of blocked calls at each switch within the network simulated by the routing function 44 is within a prescribed tolerance value that defines the required level of performance, then the network is appropriately sized. The network sizing function 40 passes such information to a decision block 48. Based on such information, the decision block 48 determines that nothing further needs to be done to the simulated network in order for it to serve as guide to realize an actual network.

Depending on the trunk groups requirements that were established at the outset, the performance of the simulated network, as measured by the performance evaluator 46, may not meet the required level of performance because of insufficient trunk capacity. Under such conditions, the network sizing function 40 alters the simulated network to increase the trunk capacity, and in particular, the trunk capacity between those switches exhibiting the highest level of call blocking. When the network sizing function 40 has altered the size of the simulated network, then the sizing function advises the decision block 48 of this action. The decision block 48 now determines that the model of the network is not completed.

When the decision block 48 has determined that the network model is not complete, the decision block re-triggers the event generator 42 to generate call events for routing across the simulated network, as now augmented by the trunk capacity established by the network sizing function 40. The performance evaluator 46 again evaluates the performance of the network, as now augmented, and informs the network sizing function 40 of the number of blocked calls as before. Once again, the network sizing function 40 will re-size the simulated network if the level of performance, as measured by the performance evaluator 46, is below the required performance level. If the network has been re-sized, then the process just described is again repeated until the measured level of performance, as measured by the performance evaluator 46, reaches the required level of network performance. Once the simulated network has been sized to provide the required level of performance, an actual network may readily be realized from the simulated one.

The above-described network model affords a distinct advantage by virtue of its ability to capture very complex routing through simulation. Indeed, the model can readily accommodate all dynamic routing techniques, including those already in existence, as well as future techniques not yet developed.

The above-described model can be applied to the design of a particular routing strategy within the logic utilized to accomplish the routing function 38. The routing function 38 may be modified and improved wherein the candidate routing logic modifications and possible improvements can be evaluated with the model 36.

The foregoing discloses a model of a dynamically routed network 10 that may be readily used in the design of such a network to assure that it meets a prescribed level of performance.

It is to be understood that the above-described embodiments are merely illustrative of the principles of the invention. Various modifications and changes may be made thereto by those skilled in the art which will embody the principles of the invention and fall within the spirit and scope thereof.

## Claims

1. A technique for modeling a telecommunications network comprised of trunk groups for carrying call events between switches, comprising the steps of:

   (a) establishing an initial set of trunk requirements for the network based on an estimated traffic load;
   (b) establishing a set of trunk groups for the network in accordance with the initial set of trunk requirements;
   (c) generating a set of call events that represent the estimated traffic load;
   (d) dynamically routing the call events through the network;
   (e) measuring the performance of the network;
   (f) determining if the performance of the network is satisfactory, and if not, then (i) augmenting the established set of trunk groups to increase network capacity, and (ii) repeating the steps of (a)-(f) until the performance of the network is satisfactory.

2. The method according to claim 1 wherein the performance of the network is measured by measuring how many call events are blocked.

3. The method according to claim 1 where the initial trunk requirements and trunk capacity increases are determined in accordance with an estimated set of trunk requirements established by Kruithof's Projection Method.

4. The method according to claim 1 wherein the call events are dynamically routed through the network in accordance with real-time traffic dependent routing.

5. The method according to claim 1 wherein the call events are dynamically routed through the network in accordance with real-time event-dependent routing.

6. The method according to claim 5 wherein the real-time event-dependent routing includes Learning with Random Routing.

7. The method according to claim 5 wherein the real-time event-dependent routing includes Dynamic Alternate Routing.

8. The method according to claim 5 wherein the real-time event dependent routing includes State and Time Dependent Routing.

9. The method according to claim 5 wherein the real-time event dependent routing includes Preplanned Dynamic Routing.

10. The method according to claim 1 wherein the call events are dynamically routed through the network in accordance with Dynamic Non-Hierarchical routing.

11. The method according to claim 1 wherein the call events are dynamically routed through the network in accordance with Real-Time State Dependent Routing.

12. The method according to claim 1 wherein the call events are dynamically routed through the network using Trunk Status Map Routing.

13. The method according to claim 1 wherein the call events are dynamically routed through the network using Dynamically Controlled Routing.

14. The method according to claim 1 wherein the call events are dynamically routed through the network using Real-Time Network Routing.

15. The method according to claim 1 wherein the call events are dynamically routed through the network using Integrated Class of Service Dynamic Routing.

16. The method according to claim 1 wherein the call events are dynamically routed through the network using $NDSO_n$ Flexible Data Networking Routing.

17. The method according to claim 1 wherein the call events are dynamically routed through the network using Circuit Selection Capability Routing.

18. The method according to claim 1 wherein the call events are dynamically routed through the network using Mixed Dynamic Routing.

19. A technique for modeling a telecommunications network comprised of trunk groups for carrying call events between switches, comprising the steps of:

(a) establishing an initial set of trunk requirements for the network based on an estimated traffic load;

(b) establishing a set of trunk groups for the network in accordance with the initial set of trunk requirements;

(c) generating a set of call events that represent the estimated traffic load;

(d) dynamically routing the call events through the network;

(e) measuring the performance of the network;

(f) determining if the performance of the network is satisfactory, and if not, then modifying the manner in which the call events are dynamically routed through the network and repeating the steps of (a)-(f) until the performance of the network is satisfactory.

FIG. 1

FORECAST TRAFFIC LOAD

LOAD UNCERTAINTIES

ACTUAL TRAFFIC

CAPACITY CHANGES

ROUTING TABLE UPDATE

CONTROLS

6 MONTHS

NETWORK

NETWORK 10

TRAFFIC DATA

PBX $12_5$

END-POINT $12_1$

PBX $12_6$

END-POINT $12_2$

END-POINT $12_4$

END-POINT $12_4$

SW $14_1$

SW $14_2$

SW $14_3$

SW $14_4$

$16_1$ $16_2$ $16_3$ $16_4$ $16_5$ $16_6$

TRUNK SIZES (TRAFFIC & TRANSPORT) 20

ROUTING TABLES (TRAFFIC & TRANSPORT) 18

CONTROL NETWORK 24

PERFORMANCE MANAGEMENT (REAL-TIME TRAFFIC MANAGEMENT, ROUTING TABLE CONTROL) 26

CAPACITY MANAGEMENT (SWITCH PLANNING, TRANSPORT NETWORK PLANNING, NETWORK DESIGN) 32

28 30 34

9

## FIG. 2

## FIG. 3